# FASCICULE DE BREVET EUROPEEN

(11) **EP 0 627 051 B1**
(45) Date de publication et mention de la délivrance du brevet: **20.08.1997**
(21) Numéro de dépôt: 94902832.8
(22) Date de dépôt: 17.12.1993
(51) Int. Cl.: F16D 13/58, F16D 13/71

(54) **MECANISME D'EMBRAYAGE, NOTAMMENT POUR VEHICULE AUTOMOBILE**
KUPPLUNGSMECHANISMUS INSBESONDERE FÜR EIN KRAFTFAHRZEUG
CLUTCH MECHANISM, PARTICULARLY FOR MOTOR VEHICLE

(30) Priorité: 17.12.1992 FR 9215246
(43) Date de publication de la demande: 07.12.1994
(73) Titulaire: VALEO, 75848 Paris Cédex 17 (FR)
(72) Inventeur: THIRION DE BRIEL, Jacques, F-92700 Colombes (FR)
(74) Mandataire: Gamonal, Didier
(86) Numéro de dépôt international: FR9301266
(87) Numéro de publication internationale: WO9413970

(56) Documents cités:
- EP-A- 0 249 469
- WO-A-92/06312
- FR-A- 2 001 379
- GB-A- 2 222 439

## Description

La présente invention concerne d'une manière générale les embrayages à diaphragme, notamment pour véhicule automobile, et vise plus particulièrement la partie de ces embrayages, communément dite mécanisme, qui formant par elle-même un ensemble unitaire est, en tant que telle, à rapporter sur un plateau, dit plateau de réaction, après insertion d'un disque de friction, pour constitution d'un tel embrayage.

D'une manière générale, et tel que décrit dans les documents FR-A-2 463 874 et EP-A-0 249 469, un tel mécanisme comporte un couvercle creux doté à sa périphérie externe d'une jupe annulaire globalement d'orientation axiale, au moins un plateau de pression, qui est lié en rotation au couvercle par des moyens d'attelage autorisant un déplacement axial dudit plateau de pression vis-à-vis dudit couvercle, et, entre le couvercle et le plateau de pression, un diaphragme dont la périphérie externe forme une rondelle Belleville, qui, d'une part, à sa périphérie externe s'appuie sur un appui de basculement, en matière élastique écrasable dans le document EP-A-0 249 469, porté par le couvercle et, d'autre part, à sa périphérie interne prend appui sur un bossage du plateau de pression pour solliciter ledit plateau dans un sens pour lequel il s'écarte du couvercle. Dans le document GB-A-2 222 439, conforme au préambule de la revendication 1, l'appui de basculement est d'un seul tenant avec un anneau anti usure servant à positionner le diaphragme par sa surface interne radiale.

Un tel mécanisme pose des problèmes. En effet, compte tenu des tolérances de fabrication le diamètre de la jupe périphérique du couvercle peut varier de manière non négligeable, par exemple de l'ordre de lmm pour une taille de couvercle de diamètre de l'ordre de 220mm.

Il en est de même dans une moindre mesure du diaphragme, dont les tolérances de fabrication sont certes plus serrées, mais qui est soumis à des phénomènes d'ovalisation du fait notamment du traitement thermique dont il est l'objet pour lui conférer une certaine dureté et une élasticité. Par exemple, le diamètre du diaphragme peut varier de 0,5mm pour une taille de couvercle de diamètre de 220mm.

Usuellement on équilibre dynamiquement le mécanisme à sa sortie de chaîne de fabrication, mais une fois monté dans le véhicule ce mécanisme peut ne plus être équilibré dynamiquement, le diaphragme se déplaçant par rapport au couvercle sous l'effet de mouvements parasites, tels que des chocs, l'usure de l'appui de basculement, les mouvements longitudinaux et radiaux du vilebrequin du moteur etc...

La présente invention a pour objet de pallier, de manière simple et économique, ces inconvénients et donc de créer un nouveau mécanisme d'embrayage équilibré dynamiquement en toute circonstance.

Suivant l'invention, un mécanisme du type sus-indiqué dans lequel l'appui de basculement porte d'un seul tenant un prolongement, globalement d'orientation axiale, interposé radialement entre la périphérie interne de la jupe du couvercle et la périphérie externe du diaphragme est caractérisé en ce que l'appui de basculement et son prolongement d'un seul tenant sont en matière élastique écrasable résistante à la température et en ce que ledit prolongement forme un palier radial monté sans précontrainte entre ladite jupe et la rondelle Belleville du diaphragme.

Grâce à l'invention, le prolongement forme un palier élastique recentrant automatiquement le diaphragme par rapport au couvercle en cas de mouvement relatif du diaphragme par rapport au couvercle.

Ainsi l'équilibrage dynamique, effectué sur chaîne, sera conservé ultérieurement. En outre l'appui de basculement avec son prolongement isole le diaphragme par rapport au couvercle, en sorte que le mécanisme n'est pas bruyant au bénéfice du confort des occupants du véhicule.

On appréciera également que l'appui de basculement permet de rattraper les usures et les tolérances de fabrication notamment les imperfections géométriques du couvercle.

En effet, le couvercle, formé usuellement par emboutissage, n'est pas d'une géométrie parfaite en sorte que l'appui qu'offre le couvercle au diaphragme n'est pas régulier et il en résulte que certains doigts du diaphragme sont décalés par rapport aux autres.

Ainsi la butée de débrayage, en agissant sur l'extrémité des doigts du diaphragme, va d'abord porter sur les doigts décalés puis sur les autres.

Il en résulte une perte de levée au niveau du plateau de pression.

Grâce à l'invention, l'appui, soumis à l'action du diaphragme, s'écrasera en sorte qu'il rattrapera ces imperfections géométriques au bénéfice d'une meilleure levée du plateau de pression. La butée de débrayage est également moins sollicitée et les usures des doigts du diaphragme diminuées.

En outre dans le cadre d'un embrayage à diaphragme du type tiré, l'appui de basculement avec son prolongement permet de bloquer en rotation le diaphragme, notamment par frottement, économisant ainsi l'utilisation de goupilles de blocage en rotation comme visible par exemple à la figure 14 du susmentionné document
FR-A-2 463 874.

Avantageusement l'appui de basculement avec son prolongement est en matériau élastique réticulable et est réalisé par dépôt sur une surface de dépôt associé au couvercle et/ou au diaphragme.

Ainsi l'appui peut être adhérisé au diaphragme en sorte que les usures, entre le diaphragme et son appui de basculement, sont minimisées.

On appréciera que l'appui de basculement avec son prolongement monobloc selon l'invention permet d'utiliser un couvercle en matière synthétique renforcée par des fibres du fait du rattrapage des imperfections géométriques réalisées par l'appui et du recentrage effectué par le prolongement.

D'une manière générale les tolérances de fabrication du couvercle et du diaphragme peuvent être moins précises en sorte que la disposition selon l'invention est économique. Les usures sont également réduites au bénéfice de la longévité du mécanisme.

En outre cet appui permet de filtrer les vibrations notamment les vibrations provenant des mouvements longitudinaux et radiaux du vilebrequin.

Dans une forme de réalisation le couvercle est conformé pour présenter un logement torique dans lequel se monte par emboîtement l'appui sous forme d'un cordon annulaire en forme de jonc. Le montage du diaphragme peut se faire alors par enfilage. En variante le prolongement peut présenter à son extrémité libre un rebord transversal dirigé vers l'axe de l'ensemble, en sorte que l'appui de basculement vient coiffer le diaphragme à la manière d'un pneu.

En variante le couvercle peut être simplifié et présenter un fond plat du fait de la présence de l'appui de basculement selon l'invention.

La description qui va suivre illustre l'invention en regard des dessins annexés dans lesquels :
- la figure 1 est une vue en élévation du mécanisme d'embrayage selon l'invention avec arrachement partiel pour montrer la partie périphérique du diaphragme,
- la figure 2 est une vue en coupe selon la ligne 2-2 de la figure 1,
- la figure 3 est une vue partielle à plus grande échelle de la figure 2 montrant l'appui de basculement et sa partie associée du couvercle,
- les figures 4 à 8 sont des vues analogues à la figure 3 pour d'autres variantes de réalisation.

Dans ces figures est illustré un mécanisme d'embrayage pour véhicule automobile, du genre comportant un couvercle creux 1 doté à sa périphérie externe d'une jupe annulaire 3, globalement d'orientation axiale, au moins un plateau de pression 20, qui est lié en rotation au couvercle 1 par des moyens d'attelage 47 autorisant un déplacement axial dudit plateau de pression 20 vis-à-vis dudit couvercle 1, et, entre le couvercle 1 et le plateau de pression 20, un diaphragme 30 dont la périphérie externe forme une rondelle Belleville 31, qui, d'une part, à sa périphérie externe s'appuie sur un appui de basculement 6,60,61,62 porté par le couvercle 1 et, d'autre part, à sa périphérie interne prend appui sur un bossage 22 du plateau de pression 20 pour solliciter ledit plateau 20 dans un sens pour lequel il s'écarte du couvercle 1.

Afin d'avoir un équilibrage dynamique en toute circonstance, et donc de limiter le déplacement relatif du diaphragme 30 par rapport au couvercle 1, notamment par rapport à la jupe périphérique 3 de celui-ci, l'appui de basculement 6,60,61 est, selon une caractéristique de l'invention, en matière élastique et écrasable résistante à la température, et porte d'un seul tenant un prolongement de recentrage 7,71, globalement d'orientation axiale, interposé radialement entre la périphérie interne de la jupe 3 du couvercle 1 et la périphérie externe du diaphragme 30.

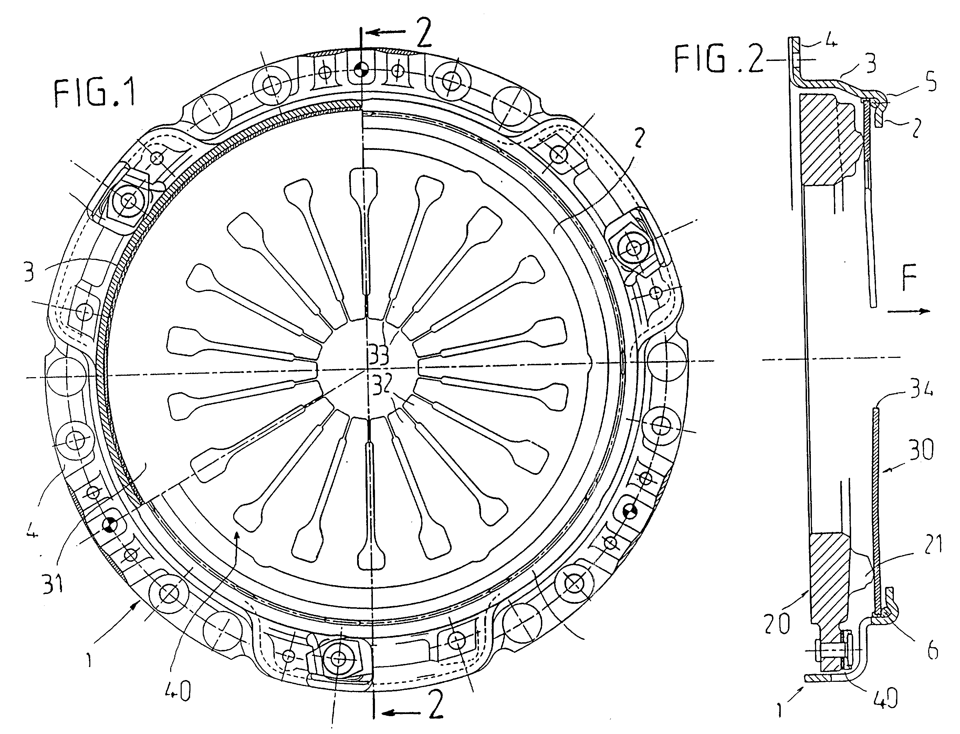

Plus précisément dans les figures 1 et 2 le couvercle 1 a une forme d'assiette creuse avec un rebord d'orientation radiale 4, s'étendant en direction opposée à l'axe de l'ensemble, une jupe annulaire 3 globalement d'orientation axiale raccordant ledit rebord 4 au fond 2 du couvercle troué centralement.

Ici le couvercle entoure par sa jupe le plateau de pression 20. Celui-ci est lié en rotation au couvercle par des moyens d'attelage, sous forme de languettes tangentielles 47, autorisant son déplacement axial vis-à-vis du couvercle 1 et dirigé transversalement vers l'axe de l'ensemble.

De manière connue en soi et telles que visibles dans les figures 1 et 2 ces languettes tangentielles 47 sont fixées à l'une de leur extrémité, ici par rivetage, à une patte du plateau de pression 20 et à leur autre extrémité par rivetage à une plage décalée du rebord 4.

Bien entendu toutes les dispositions divulguées dans le document FR-A-2 463 874 sont envisageables, les moyens d'attelage pouvant consister en des tenons radiaux du plateau de pression engagés chacun dans une rainure axiale pratiquée dans la jupe 3 du couvercle 1.

Le rebord radial 4 peut avoir une autre forme et présenter des entretoises soudées par sa liaison avec le plateau de réaction. Le mécanisme unitaire peut présenter deux plateaux de pression et un disque de friction, dont les garnitures sont serrées entre les deux plateaux.

Pour mémoire on rappellera que le mécanisme d'embrayage unitaire, formé par les pièces de forme annulaire, couvercle 1, plateau de pression 20, diaphragme 30, est adapté à être rapporté par son couvercle 1 (ici par la plage 4 de celui-ci) sur le plateau de réaction de l'embrayage (non représenté) pour serrage entre lesdits plateaux de pression et de réaction des garnitures d'un disque de friction présentant à sa périphérie interne un moyeu cannelé pour sa liaison en rotation avec l'arbre d'entrée de la boîte de vitesses, le plateau de réaction et le mécanisme d'embrayage étant liés en rotation avec le vilebrequin du moteur à combustion interne.

En position embrayage engagé, le diaphragme 30, en appui sur l'appui de basculement 6 (figure 2), sollicite le plateau de pression en direction opposée au fond 2, dans un sens par lequel il s'écarte du couvercle 1 pour serrage des garnitures du disque de friction entre les plateaux de pression et de réaction.

Pour désengager l'embrayage, il faut agir en traction sur le diaphragme 30, à l'aide d'une butée de débrayage visible par exemple à la figure 1 du susmentionné document FR-A-2 463 874, dans le sens de la flèche F de la figure 2 pour faire basculer ledit diaphragme 30 et faire cesser son action de serrage sur le plateau 20, afin de lever ledit plateau et libérer les garnitures dudit disque de friction.

Ce diaphragme 30 a une forme tronconique à l'état libre et une fois monté dans le mécanisme a une forme initialement globalement plane en position embrayage engagé. Il présente une partie périphérique en forme de rondelle Belleville 31 à partir de laquelle s'étendent centralement vers l'intérieur des doigts radiaux 32 séparés deux à deux par des fentes 33.

Ces fentes débouchent dans une ouverture centrale commune 34. C'est en agissant en traction sur l'extrémité libre des doigts du diaphragme, que l'on fait basculer celui-ci. Ce diaphragme s'appuie par la périphérie interne de sa rondelle Belleville 31 sur un bossage 21, ici fragmenté en secteur, du plateau de pression 20 et par la périphérie externe de sa rondelle Belleville sur l'appui de basculement 6 porté par le couvercle 1.

Dans les figures 1 à 3, le couvercle comporte un logement torique 5 formant la zone de raccordement de la jupe 3 avec le fond 2 du couvercle.

L'appui de basculement, en matière élastique selon l'invention, comporte un cordon annulaire, ici de section circulaire, propre à être monté par emboîtement dans ledit logement torique 5.

Le logement 5 a une forme complémentaire à celle du cordon d'appui 6 en forme de jonc.

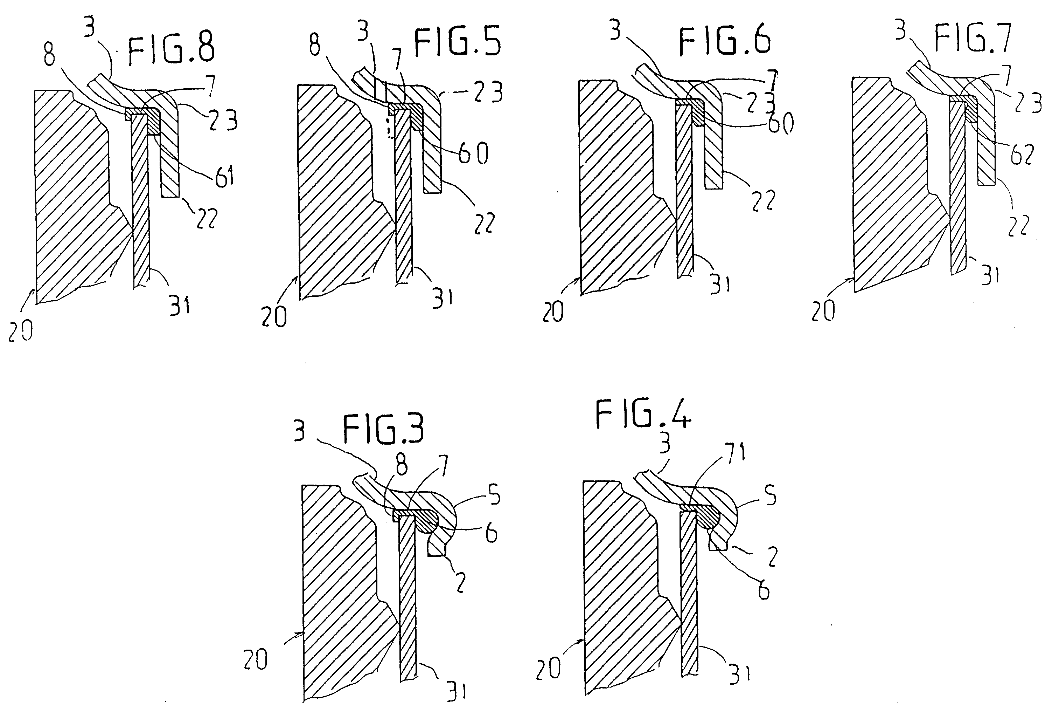

L'appui 6 (figure 3) est conformé à sa périphérie externe pour présenter le prolongement d'orientation axiale 7 selon l'invention, ici d'épaisseur constante.

A son extrémité libre, ce prolongement présente un rebord transversal 8 dirigé vers l'axe de l'ensemble.

Ainsi l'appui 6 avec son prolongement 7 et son rebord 8 vient coiffer à la manière d'un pneu la périphérie externe du diaphragme et plus précisément la périphérie externe de la rondelle Belleville 31.

La rondelle Belleville 31 est donc coincée axialement entre l'appui 6 proprement dit et le rebord 8.

Le prolongement 7 est interposé radialement entre la périphérie externe de la rondelle 31 (la tranche de celle-ci) et la périphérie interne de la jupe 3.

Ainsi qu'on l'aura compris l'appui 6, grâce à son rebord 8, peut être monté par avance sur la rondelle Belleville 31, puis l'ensemble 31,6,7,8 est enfilé axialement à l'intérieur de la jupe 3 jusqu'à ce que l'appui 6, ici globalement en forme de jonc annulaire, vient s'emboîter dans le logement torique 5 complémentaire.

Bien entendu (figure 4) on peut emmancher par avance le jonc 6 dans son logement torique 5 puis venir enfiler le diaphragme sur le prolongement 71 du jonc 6.

Dans ce cas ce prolongement 71 est dépourvu de rebord 8 et présente une extrémité libre chanfreinée pour faciliter l'enfilage de la rondelle Belleville 31.

Le couvercle 1 peut être simplifié et présenter un fond 22 d'orientation transversale dirigé vers l'axe de l'ensemble, ledit fond se raccordant par un arrondi 23 à la jupe 3. Dans ce cas (figure 5) l'appui de basculement 60, formant un cordon annulaire, a en section une forme oblongue en présentant un prolongement 7 et un rebord 8. L'appui 60 épouse la forme de l'arrondi 23 du couvercle.

Cet appui 60 s'étend transversalement et présente une première face épousant la forme du fond 22 et la forme de l'arrondi 23, pour contact avec lesdites parties, et une deuxième face globalement plane pour contact avec la face concernée de la rondelle Belleville 31. Cette deuxième face a une extrémité interne chanfreinée.

Dans ce cas, comme à la figure 3, l'appui 60 avec son prolongement 7 et son rebord 8 est monté d'abord sur la rondelle Belleville 31 puis on vient emmancher le tout dans la jupes 3 jusqu'à contact du cordon annulaire 60 avec le fond 22 et l'arrondi 23.

A la figure 6 l'appui de basculement 60 a la même forme qu'à la figure 5 mais présente uniquement un prolongement 7, l'appui 60 étant monté par avance dans le couvercle 6. Il en est de même à la figure 7 mais dans ce cas, l'appui de basculement 62 a une forme différente et présente une deuxième face de forme arrondie pour contact ponctuel avec la face concernée de la rondelle Belleville 31.

A la figure 8 l'appui de basculement 61 présente, comme à la figure 5, un prolongement 7 et un rebord 8 mais sa deuxième face n'est pas chanfreinée.

On notera, dans les figures 4,6 et 7, que le cordon annulaire 6,60,62 peut être en matériau élastique réticulable en étant réalisé par dépôt sur une surface de dépôt associée de préférence au couvercle.

Par exemple, ce cordon en matière élastique est par exemple une pâte de silicone résistante à la température et commercialisée par la Société RHONE-POULENC sous la marque "RHODORSEAL" (marque déposée).

Le dépôt est réalisé avantageusement à l'aide d'une buse garantissant l'épaisseur du cordon.

Dans ce cas la surface de dépôt est formée par le fond du couvercle 22, la périphérie interne de la jupe 3 et l'arrondi 23 ou le logement 5.

Cette pâte adhère ainsi au couvercle et également avantageusement au diaphragme, celui-ci étant monté tout de suite après le dépôt.

Ainsi les usures de l'appui 6,60,62 sont diminués et le contact du diaphragme avec son appui n'est pas bruyant.

On appréciera que le logement torique 5 forme un moule pour le jonc 6. Il en est de même dans une moindre mesure de l'arrondi 23.

Bien entendu dans les figures 3,5 et 8, on peut réaliser également un dépôt de pâté en matière élastique sur la rondelle Belleville 31. Dans tous les cas on appréciera que l'appui de basculement 6,60,61,62, grâce à son prolongement axial 7,71, permet une liaison en rotation du diaphragme 30 avec le couvercle soit par frottement soit par adhérence. Dans tous les cas, le prolongement 7,71 forme, selon l'invention, un palier radial monté sous précontrainte entre la rondelle Belleville 31 et la jupe 3 permettant un recentrage en toute circonstance du diaphragme 30. De même l'appui de basculement élastique 6,60,61,62 écrasé par le diaphragme 30 permet de rattraper les usures, imperfections géométriques du diaphragme 30 et/ou du couvercle 1 et de filtrer les vibrations.

On appréciera que la précontrainte du prolongement selon l'invention améliore le blocage en rotation du diaphragme.

Bien entendu, au lieu d'emmancher l'appui sur la rondelle Belleville 31 à la manière d'un pneu, on peut déposer par enroulement l'appui avec son prolongement à l'aide d'une filière.

En variante l'appui et son prolongement monobloc peuvent être en un autre matériau élastique résistant à la température, tel que de l'élastomère à base de silicone ou de l'élastomère à base de nitrile.

Bien entendu, comme visible à la figure 5, on peut réaliser des ouvertures de ventilation dans la jupe 3 pour évacuer la chaleur et ménager l'appui et son prolongement.

On peut prolonger le rebord 8 vers l'intérieur (pointillés de la figure 5) pour former des ailettes inclinées brassant l'air chaud afin de diminuer la température au niveau du prolongement et de son appui. Ces ailettes sont tournées vers le plateau de pression 20.

## Revendications

1. Mécanisme d'embrayage, notamment pour véhicule automobile, du genre comportant un couvercle creux (1), doté à sa périphérie externe d'une jupe annulaire (3) globalement d'orientation axiale, au moins un plateau de pression (20), qui est lié en rotation au couvercle (1) par des moyens d'attelage (47) autorisant un déplacement axial dudit plateau de pression (20) vis-à-vis dudit couvercle (1), et, entre le couvercle (1) et le plateau de pression (20), un diaphragme (30) dont la périphérie externe forme une rondelle Belleville (31), qui, d'une part, à sa périphérie externe s'appuie sur un appui de basculement (6,60,61,62) porté par le couvercle (1) et, d'autre part, à sa périphérie interne prend appui sur un bossage (22) du plateau de pression (20) pour solliciter ledit plateau (20) dans un sens pour lequel il s'écarte du couvercle (1) dans lequel l'appui de basculement (6,60,61) porte d'un seul tenant un prolongement (7,71), globalement d'orientation axiale, interposé radialement entre la périphérie interne de la jupe (3) du couvercle (1) et la périphérie externe du diaphragme (30), caractérisé en ce que l'appui de basculement (6,60,61) et son prolongement (7,71) d'un seul tenant sont en matière élastique écrasable résistante à la température et en ce que ledit prolongement (7,71) forme un palier radial monté sous précontrainte entre la jupe (3) du couvercle (1) et la rondelle Belleville (31) du diaphragme (30)

2. Mécanisme selon la revendication 1, caractérisé en ce que l'appui de basculement (6,60,61,62) avec son prolongement de recentrage (7,71) est en matériau élastique réticulable et est réalisé par dépôt sur une surface de dépôt associée au couvercle (1) et/ou au diaphragme (30).

3. Mécanisme selon la revendication 1 ou 2, dans lequel le couvercle comporte un fond (2), caractérisé en ce que l'appui de basculement (6) comporte un cordon annulaire en forme de jonc monté dans un logement torique complémentaire (5) formant la zone de raccordement de la jupe (3) avec le fond (2) du couvercle.

4. Mécanisme selon la revendication 3, caractérisé en ce que l'appui de basculement (6) est monté par emboîtement dans son logement torique (5).

5. Mécanisme selon la revendication 1 ou 2, dans lequel le couvercle (1) présente un fond (2), caractérisé en ce que l'appui de basculement (60,61,62) avec son prolongement (7,71) d'un seul tenant épouse la forme d'un arrondi (23) du couvercle raccordant la jupe (3) de celui-ci à son fond (22), et en ce que ledit appui de basculement à une forme oblongue.

6. Mécanisme selon l'une quelconque des revendications 1 à 5 , caractérisé en ce que le prolongement (7) est pourvu à son extrémité libre d'un rebord transversal (8) dirigé vers l'axe de l'ensemble, en sorte que l'appui de basculement (6,610,61) avec son prolongement (7,71) d'un seul tenant vient coiffer la rondelle Belleville (31) du diaphragme (30).

7. Mécanisme selon la revendication 6, caractérisé en ce que ledit rebord (8) est prolongé vers l'intérieur pour former des ailettes inclinées de ventilation tournées vers le plateau de pression (20).

8. Mécanisme selon l'une quelconque des revendications 1 à 7, caractérisé en ce que la jupe (3) du couvercle (1) est pourvue d'ouvertures de ventilation pour évacuer la chaleur.

9. Mécanisme selon l'une quelconque des revendications 1 à 8, caractérisé en ce que le couvercle (1) est en matière synthétique renforcée par des fibres.

## Patentansprüche

1. Kupplungsmechanismus, insbesondere für ein Kraftfahrzeug, umfassend einen hohlen Deckel (1), der an seinem Außenrand mit einer insgesamt axial ausgerichteten ringförmigen Einfassung (3) versehen ist, mindestens eine Druckplatte (20), die drehfest mit dem Deckel (1) durch Anfügemittel (47) verbunden ist, die eine axiale Verschiebung der besagten Druckplatte (20) gegenüber dem besagten Deckel (1) ermöglichen, und, zwischen dem Deckel (1) und der Druckplatte (20), eine Membranfeder (30), deren Außenrand eine Tellerfeder (31) bildet, die einerseits an ihrem Außenrand an einer am Deckel (1) angebrachten Kippauflage (6, 60, 61, 62) anliegt und andererseits an ihrem Innenrand auf einem Vorsprung (22) der Druckplatte (20) zur Auflage kommt, um die besagte Druckplatte (20) in einer Richtung zu beaufschlagen, bei der sie sich vom Deckel (1) entfernt, wobei die Kippauflage (6, 60, 61) einstückig eine insgesamt axial ausgerichtete Verlängerung (7, 71) trägt, die radial zwischen dem Innenrand der Einfassung (3) des Deckels (1) und dem Außenrand der Membranfeder (30) eingefügt ist, **dadurch gekennzeichnet,** daß die Kippauflage (6, 60, 61) und ihre einstückige Verlängerung (7, 71) aus einem temperaturbeständigen stauchbaren elastischen Werkstoff bestehen und daß die besagte Verlängerung (7, 71) ein radiales Lager bildet, das vorgespannt zwischen der Einfassung (3) des Deckels (1) und der Tellerfeder (31) der Membranfeder (30) eingebaut ist.

2. Mechanismus nach Anspruch 1, **dadurch gekennzeichnet,** daß die Kippauflage (6, 60, 61, 62) mit ihrer Nachzentrierverlängerung (7, 71) aus einem vernetzbaren elastischen Werkstoff besteht und durch Auftragung auf einer mit dem Deckel (1) und/oder mit der Membranfeder (30) verbundenen Auftragfläche ausgeführt ist.

3. Mechanismus nach Anspruch 1 oder 2, bei dem der Deckel einen Boden (2) enthält , **dadurch gekennzeichnet**, daß die Kippauflage (6) einen ringförmigen Wulst in Form einer Leiste umfaßt, die in eine formschlüssige torische Aufnahme (5) eingesetzt ist, die den Anschlußbereich zwischen der Einfassung (3) und dem Boden (2) des Deckels bildet.

4. Mechanismus nach Anspruch 3, **dadurch gekennzeichnet**, daß die Kippauflage (6) mittels Einpassung in ihre torische Aufnahme (5) eingesetzt ist.

5. Mechanismus nach Anspruch 1 oder 2, bei dem der Deckel (1) einen Boden (2) aufweist, **dadurch gekennzeichnet**, daß sich die Kippauflage (60, 61, 62) mit ihrer einstückigen Verlängerung (7, 71) an die Form einer Rundung (23) des Deckels anpaßt, die dessen Einfassung (3) mit seinem Boden (22) verbindet, und daß die besagte Kippauflage eine längliche Form hat.

6. Mechanismus nach einem der Ansprüche 1 bis 5, **dadurch gekennzeichnet**, daß die Verlängerung an seinem freien Ende mit einer zur Achse der Einheit gerichteten Querrandleiste (8) versehen ist, so daß die Kippauflage (6, 610, 61) mit ihrer einstückigen Verlängerung (7, 71) die Tellerfeder (31) der Membranfeder (30) abdeckt.

7. Mechanismus nach Anspruch 6, **dadurch gekennzeichnet**, daß die besagte Randleiste (8) nach innen verlängert ist, um geneigte Lüftungsrippen zu bilden, die zur Druckplatte (20) gerichtet sind.

8. Mechanismus nach einem der Ansprüche 1 bis 7, **dadurch gekennzeichnet,** daß die Einfassung (3) des Deckels (1) mit Lüftungsöffnungen versehen ist, um die Wärme abzuführen.

9. Mechanismus nach einem der Ansprüche 1 bis 8, **dadurch gekennzeichnet**, daß der Deckel (1) aus faserverstärktem Kunststoff besteht.

## Claims

1. A clutch mechanism, especially for a motor vehicle, of the kind comprising a hollow cover plate (1) having at its outer periphery an annular skirt (3), oriented generally axially, at least one pressure plate (20), which is coupled in rotation to the cover plate (1) through attachment means (47) which enable the said pressure plate (20) to be displaced axially with respect to the said cover plate (1), and, between the cover plate (1) and the pressure plate (20), a diaphragm (30) the outer periphery of which defines a Belleville ring (31), which, firstly, bears at its outer periphery on a deflection abutment (6, 60, 61, 62) carried by the cover plate, and secondly, bears at its inner periphery on a projecting element (21) of the pressure plate (20) so as to urge the said plate (20) in a direction in which it is displaced away from the cover plate (1), in which the deflection abutment (6, 60, 61) carries an integral centring extension (7, 71), oriented generally axially and interposed radially between the inner periphery of the skirt (3) of the cover plate (1) and the outer periphery of the diaphragm (30), characterised in that the deflection abutment (6, 60, 61) with its integral extension (7, 71) are of heat resistant elastic material and in that the said extension (7, 71) is mounted under precompression between the skirt (3) of the cover plate (1) and the Belleville ring (31) of the diaphragm (30).

2. A mechanism according to Claim 1, characterised in that the deflection abutment (6, 60, 61, 62) with its centring extension (7, 71) is of an elastic material capable of being reticulated, and is formed by deposition on a deposit surface associated with the cover plate (1) and/or with the diaphragm (30).

3. A mechanism according to Claim 1 or 2, in which the cover plate includes a base (2), characterised in that the deflection abutment (6) comprises an annular band in the form of a ring mounted in a complementary toroidal seating element (5) defining the junction zone of the skirt (3) with the base (2) of the cover plate.

4. A mechanism according to Claim 3, characterised in that the deflection abutment (6) is mounted by nesting in its toroidal seating element (5).

5. A mechanism according to Claim 1 of 2, in which the cover plate has a base (2), characterised in that the deflection abutment (60, 61, 62) with its integral extension (7, 71) hugs the form of a rounded portion (23) of the cover plate which joins the skirt (3) of the latter to its base (22) and in that the said deflection abutment has an oblong shape.

6. A mechanism according to any one of claims 1 to 5, characterised in that the extension (7) is provided at its free end with a transverse flange (8) directed towards the axis of the assembly, in such a way that the deflection abutment (6, 60, 61) with its integral extension (7, 71) caps the Belleville ring (31) of the diaphragm (30).

7. A mechanism according to claim 6, characterised in that the said flange (8) is extended inwardly so as to define inclined ventilating fins directed towards the pressure plate (20).

8. A mechanism according to any one of Claims 1 to 7, characterised in that the skirt (3) of the cover plate (1) is provided with ventilating apertures for evacuating heat.

9. A mechanism according to any one of Claims 1 to 8, characterised in that the cover plate (1) is made of fibre reinforced synthetic material.
